# EUROPÄISCHE PATENTSCHRIFT

(11) **EP 2 759 031 B1**
(45) Veröffentlichungstag und Bekanntmachung des Hinweises auf die Patenterteilung: **18.11.2015**
(21) Anmeldenummer: 12784201.1
(22) Anmeldetag: 07.09.2012
(51) Int. Cl.: H02G 13/00

(54) **BLITZSTROMABLEITVORRICHTUNG**
LIGHTNING CONDUCTOR DEVICE
DISPOSITIF DE DÉRIVATION DU COURANT DE FOUDRE

(30) Priorität: 19.09.2011 DE 102011113659
(43) Veröffentlichungstag der Anmeldung: 30.07.2014
(73) Patentinhaber: OBO Bettermann GmbH & Co. KG, 58710 Menden (DE)
(72) Erfinder: ECHTERMANN, Benjamin, 58644 Iserlohn (DE); TRINKWALD, Jürgen, 58708 Menden (DE)
(74) Vertreter: Köchling, Conrad-Joachim
(86) Internationale Anmeldenummer: PCT/DE2012/000894
(87) Internationale Veröffentlichungsnummer: WO 2013/041074

(56) Entgegenhaltungen:
- WO-A1-2008/026766
- GB-A- 2 332 458
- US-A1- 2002 162 671

## Beschreibung

Die Erfindung betrifft eine Blitzstromableitvorrichtung für den äußeren Blitzschutz, bestehend aus einer Fangeinrichtung und einer Erdungsanlage, die durch eine elektrische Leiteinrichtung miteinander verbunden sind, wobei die elektrische Leiteinrichtung aus mindestens zwei zueinander parallel geschalteten, isolierten elektrischen Leitern besteht.

Solche Blitzstromableitvorrichtungen sind im Stand der Technik bekannt. Es wird dazu beispielsweise auf die EP 1 760 855 B1 oder aber die DE 102 28 665 B4 verwiesen.

Zum Schutz von Gebäuden gegen direkten Blitzeinschlag werden in der IEC 62305-3 ein äußeres und ein inneres Blitzschutzsystem vorgeschlagen. Das äußere Blitzschutzsystem soll:
den Blitz mit einer metallischen Fangeinrichtung gezielt einfangen,
den Blitzstrom mit Hilfe eines Systems aus metallischen Ableitungen sicher zum Erdreich ableiten,
den Blitzstrom im Erdreich verteilen.

Das innere Blitzschutzsystem ist nicht Gegenstand dieser Anmeldung.

Aus der US 2002/162671 A1 ist ein mobiler Blitzschutz für Fahrzeuge mit mehreren elektrischen, zueinander parallel geschalteten, elektrisch isolierten Leitern bekannt, wobei auch eine Fangeinrichtung und Erdanschlüsse in Form von Ketten, die auf den Boden schleifen, vorgesehen sind. Diese Ausgestaltung arbeitet nach dem Prinzip des faraday schen Käfigs. Für den Gebäudeschutz sind solche Anlagen nicht geeignet.

Aus der GB 2 332 458 A ist ein Blitzschutzzelt mit Erdspießen und Fangstange bekannt. Auch diese Einrichtung arbeitet nach dem Prinzip des faraday'schen Käfigs und ist für den Schutz von Gebäudeanlagen oder dergleichen nicht geeignet.

Aus der WO 2008/026 766 A1 ist eine Blitzschutzeinrichtung bekannt, die aus einem Blitzstromableiter mit Fangstange und elektrischen Leiter besteht. Den Leiter umgibt ein Stahlrohr, wobei zwischen Leiter und dem Innenmantel des Stahlrohres ein leitfähiger Füllstoff angeordnet ist, sodass der Blitzstrom aufgeteilt wird. Eine niedrigfrequente Komponente fließt durch den Leiter, eine hochfrequente Komponente fließt durch das Stahlrohr, jeweils zur Erdungseinrichtung. Diese Komponenten können mehrfach zueinander parallel geschaltet vorgesehen sein.

Eine solche Ausgestaltung ist für den Gebäudeschutz äußerst kompliziert und zudem durch die Anordnung von elektrischem Leiter, Rohr und elektrisch leitendem Füllstoff kompliziert und teuer im Aufbau und in der Installation. Herkömmlich werden metallische Ableitungen im äußeren Blitzschutzsystem an Gebäuden installiert und reichen von der Fangstange bis zum Erdanschluss. Sie verlaufen an der Außenhaut des Gebäudes und sind über Abstandhalter von der Gebäudewandung oder Gebäudebestandteilen beabstandet.

Während eines Blitzeinschlages fließt ein zeitlich veränderlicher Strom in der Ableitung und erzeugt in der zwischen der Ableitung und dem Gebäude aufgespannten Fläche eine induzierte Spannung. Die Höhe dieser Spannung kann so große Werte annehmen, dass es zu einem Durchschlag zwischen der Ableitung und der Gebäudewandung oder dergleichen Gebäudeteilen kommt. Zur Vermeidung eines solchen Durchschlages wird in der oben angegebenen Norm eine elektrische Isolation zwischen der Ableitung und metallenen Teilen des Gebäudes, metallenen Installationen und internen Systemen gefordert. Nach der Norm soll diese Isolation durch Einhaltung eines Trennungsabstandes sichergestellt werden.

Durch bauliche Gegebenheiten, ästhetische und architektonische Gründe ist der geforderte Trennungsabstand nicht in jedem Falle einzuhalten. Daher wurden bereits Wege gesucht, den Trennungsabstand mit Hilfe von Isolierstoffen zu reduzieren.

Nach dem Stand der Technik, der eingangs angegeben wurde, wurden Lösungen mit isolierten Ableitungen vorgeschlagen, die einen nach der Norm geforderten äquivalenten Trennungsabstand einhalten. Die tatsächliche Spannung, die in einem äußeren Blitzschutzsystem mit dem entsprechenden Trennungsabstand auftritt, ist für die Funktion der isolierten Ableitung maßgebend. Bei diesen Betrachtungen ist zu beachten, dass die Spannungsfestigkeit einer isolierten Ableitung, bei der nach dem Stand der Technik vernetztes Polyethylen (VPE) verwendet wird, keine Abhängigkeit der Durchschlagspannung von der Steilheit der angelegten Stoßspannung im technisch interessierenden Zeitbereich von größer 100 Nanosekunden aufweist. Der Durchschlag der isolierten Ableitung erfolgt dann, wenn die elektrische Feldstärke im Isolierstoff den Grenzwert von etwa 2400 kV/cm erreicht hat.

Auch muss aber berücksichtigt werden, dass eine isolierte Ableitung auch an einem isolierten Gebäude, einem metallischen Mast oder ähnlichen baulichen Gegenständen befestigt werden muss. Nach dem Stand der Technik müssen dabei an der Befestigungsstelle Maßnahmen ergriffen werden, die einen äußeren Überschlag durch Gleitladungen verhindern. Die Verhinderung von Gleitladungen kann dabei beispielsweise durch Maßnahmen erfolgen, wie sie in der eingangs genannten Druckschrift angegeben sind. Da bei üblichen Testversuchen eine Diskrepanz zwischen der tatsächlich auftretenden induzierten Spannung und der Durchschlagsfestigkeit einer isolierten Ableitung besteht, besteht ein Bedarf dahin, eine isolierte Ableitung so zu dimensionieren, dass die Durchschlagspannung der isolierten Leitung größer oder gleich der induzierten Spannung ist, welcher die isolierte Leitung unterliegt.

Ziel der Erfindung ist daher, die Dimensionierung einer isolierten Ableitung durch Reduktion der induzierten Spannung bei vorgegebener Durchschlagspannung der isolierten Ableitung.

Im Wesentlichen kann die induzierte Spannung durch die Einstellung einer Gegeninduktivität reduziert werden.

Um dies zu erreichen schlägt die Erfindung vor, dass die elektrischen Leiteinrichtungen aus mindestens zwei zueinander parallel geschalteten, isolierten elektrischen Leitern besteht, wobei die Leiter zueinander im Wesentlichen räumlich parallel verlaufend angeordnet sind und der Mittenabstand zwischen benachbarten isolierten Leitern zwischen dem einfachen und dem 50-fachen Durchmesser der isolierten Leiter beträgt.

Hierbei erfolgt die Reduktion der induzierten Spannung mittels der längenbezogenen Gegeninduktivität durch Parallelschalten von mehreren isolierten Leitern als Ableitungen. In ausreichendem Abstand von der Gebäudefläche eines Gebäudes wird hierbei eine elektrisch leitende und blitzstromtragfähige Verbindung zu den isolierten Leitern hergestellt, deren Abstand vom Gebäude oder Gebäudeteilen durch bauliche Gegebenheiten bestimmt ist. Die isolierten Leiter werden in einem ausreichenden Abstand angeordnet und unten im Übergang zur Erdungsanlage mittels eines elektrisch leitenden, blitzstromtragfähigen Anschlusses an die Erdverbindung zur Erdungsanlange angeschlossen.

Durch die Verwendung von parallel geschalteten isolierten Leitern teilt sich der oben in die Fangstange der Fangeinrichtung eingeführte Blitzstrom annähernd gleichmäßig auf die isolierten Leiter auf. Dadurch wird die magnetische Feldstärke zwischen den isolierten Leitern und dem Gebäude reduziert. Durch diesen Effekt reduziert sich auch die längenbezogene Gegeninduktivität.

Insgesamt wird durch diese Ausgestaltung eine verbesserte Durchschlagfestigkeit der Gesamt-Ableitvorrichtung erreicht.

Der Mittenabstand der isolierten Leiter voneinander soll zwischen dem einfachen und dem 50-fachen Durchmesser, bzw. der einfachen und 50-fachen Querschnittsbemessung der isolierten Leiter liegen. Bei einer weiteren Vergrößerung des Abstandes würde die Stromaufteilung auf die einzelnen isolierten Ableitungen durch die Induktivität der elektrisch leitenden und Blitzstrom tragfähigen Verbinder, an die die elektrischen Leiter angeschlossen sind, nachteilig beeinflusst. Aus dem gleichen Grunde ist auch eine Erhöhung der Anzahl der isolierten Leiter über 5 nicht sinnvoll.

Eine alternative Ausgestaltung, die ebenfalls als vorteilhaft angesehen wird, wird darin gesehen, dass die elektrische Leiteinrichtung aus mindestens einem elektrischen Leiter mit rechteckigem Querschnitt besteht, dessen Ecken vorzugsweise gerundet sind und dessen Seitenkanten ein Breite zu Länge Verhältnis von vorzugsweise mindestens 1:10 beträgt.

Auch hierbei wird eine höhere Sicherheit gegen Spannungsdurchschläge erreicht.

Besonders bevorzugt ist vorgesehen, dass mindestens drei parallel geschaltete isolierte Leiter angeordnet sind.

Zudem ist bevorzugt, dass höchstens fünf parallel geschaltete Leiter angeordnet sind.

Bevorzugt ist zudem vorgesehen, dass die Leiter gleiche Querschnittsabmessung aufweisen.

Solche Leiter können Rundleiter sein oder auch verdrillte kabelartige Leiter, die im Ergebnis in etwa kreisförmigen Querschnitt aufweisen.

Wie im eingangs genannten Stand der Technik an sich bekannt, ist vorzugsweise vorgesehen, dass jeder Leiter von einer hochspannungsfesten Isolationsumhüllung, vorzugsweise aus VPE, umgeben ist.

Die isolierten Leiter werden nur mit Spannung beansprucht, wenn ein Blitzfall eintritt. Die Beanspruchungsdauer ist kleiner als eine Mikrosekunde. Aus diesem Grunde spielen Leitfähigkeitsverluste und dielektrische Verluste des Isolierstoffes keine Rolle, weswegen die Leitfähigkeit des Isolierstoffes durch besondere Maßnahmen, beispielsweise durch eine Dotierung mit leitendem Material höher eingestellt werden kann, als es zum Beispiel für Anwendungen in der Mittel- und Hochspannungstechnik üblich ist. Durch eine Dotierung kann der Isolierstoff weniger anfällig gegen Fehlstellen bei der Produktion gemacht werden.

Des Weiteren ist bevorzugt vorgesehen, dass die Isolationsumhüllung von einer leitenden Schicht, vorzugsweise leitfähigem VPE, umgeben ist.

Zudem kann vorgesehen sein, dass jeder Leiter von einer leitfähigen Schicht, vorzugsweise aus leitfähigem VPE, umhüllt ist, die von einer hochspannungsfesten Isolationsumhüllung umgeben ist.

Diese Maßnahme dient insbesondere bei verdrillten Leitern, die insgesamt einen isolierten elektrischen Leiter bilden, dazu, Luftspalte auszugleichen, die bei Erwärmung (beispielsweise im Blitzfall) durch unterschiedliche thermische Ausdehnungskoeffizienten des elektrischen Leiters gegenüber der Isolationsumhüllung auftreten könnten. Die Folge wäre eine Minderung der Hochspannungsfestigkeit im Blitzfall, was durch die angegebene Maßnahme vermieden wird.

Zudem ist bevorzugt vorgesehen, dass die die Isolationsumhüllung umgebende, leitende Schicht von einer schwach leitfähigen Schicht, vorzugsweise einer Schicht aus EVA, umgeben ist.

Diese Schicht ist ein Ethylen- Vinylacetat-Copolymer. Sie beeinflusst das Verhalten der Blitzstromableitvorrichtung positiv.

Zudem kann vorgesehen sein, dass jeder Leiter aus einem massiven Stab aus elektrisch gut leitendem Metall oder aus einer mehradrigen, verdrillten Seilstruktur aus solchem Metall besteht.

Eine bevorzugte Weiterbildung wird darin gesehen, dass alle elektrischen Leiter von einer gemeinsamen hochspannungsfesten Isolationsumhüllung, vorzugsweise aus VPE, umgeben sind.

Hierbei sind die einzelnen elektrischen Leiter samt Isolationsumhüllung nicht in dieser Form nebeneinander angeordnet, sondern die elektrischen Leiter sind in geeignetem Abstand voneinander in einer gemeinsamen Isolationsumhüllung angeordnet, wodurch die Verlegung und Handhabung vereinfacht wird. Zudem sind hierbei die Abstände zwischen den elektrischen Leitern schon bei der Herstellung festgelegt, so dass sie nicht manipulierbar sind. Bevorzugt ist ferner vorgesehen, dass die der Fangeinrichtung benachbarten Enden und die der Erdungsanlage zugewandten Enden der elektrischen Leiter jeweils an eine blitzstromtragfähige Verbindungsschiene angeschlossen sind, die an die Fangstange oder die Erdungsanlage angeschlossen ist.

Hierbei kann vorgesehen sein, dass auch die die Isolationsumhüllung umgebende leitende Schicht und/oder die diese umgebende schwach leitfähige Schicht an die Verbindungsschienen angeschlossen ist.

Auch kann vorgesehen sein, dass auf den Enden der elektrischen Leiter samt der diese umgebenden Umhüllungen eine Anschlusskappe aus elektrisch leitendem Material angeordnet ist, mit der die äußere schwach leitende Schicht und der elektrische Leiter kontaktiert ist und die an die jeweilige Verbindungsschiene angeschlossen ist.

Zur Befestigung der Teile aneinander kann vorgesehen sein, dass die Verbindungsschiene jeweils eine Durchgangs- oder Sacklochung aufweist für jeden elektrischen Leiter, so dass dieser in die Lochung kontaktierend einsteckbar ist und dass die Verbindungsschiene die Durchgangs- oder Sacklochung zentrisch umgebend abgestuft eine querschnitts- oder durchmessergrößere Aufnahmelochung für die Isolationsumhüllung samt weiteren diese umgebenden Schichten aufweist.

Aus dem gleichen Grunde kann vorgesehen sein, dass die Verbindungsschiene mindestens eine die Sack- oder Durchgangslochung kreuzende Gewindebohrung mit Spannschraube aufweist, die gegen den Mantel des elektrischen Leiters spannbar ist.

Zudem kann bevorzugt vorgesehen sein, dass die Aufnahmelochung innenseitig am Mantel radial federnde Kontaktfedern aufweist, die am Mantel der die Isolationsumhüllung umgebenden äußersten Schicht anliegen.

Auch kann vorgesehen sein, dass die Verbindungsschienen an der der Erdungsanlage zugewandten Seite und/oder an der der Fangeinrichtung zugewandten Seite eine Gewindebohrung zum Anschluss einer Fangeinrichtung oder einer Erdungseinrichtung aufweisen.

Ausführungsbeispiele der Erfindung sind in der Zeichnung dargestellt und im Folgenden näher beschrieben:
Es zeigt:
   - Figur 1: eine schematische Anordnung einer Blitzstromableitvorrichtung an einem Gebäude in Ansicht;
   - Figur 2: eine Variante in schematischer Darstellung;
   - Figur 3: ein Beispiel einer komplett isolierten Ableitung im Querschnitt mit fünf einzelnen elektrischen Leitern;
   - Figur 4: eine Variante einer isolierten Ableitung im Querschnitt gesehen mit einem einzelnen rechteckförmigen elektrischen Leiter;
   - Figur 5: ein schematisches Bespiel einer Anordnung von zwei parallel geschalteten kompletten Ableitungen mit Abstandshaltern;
   - Figur 6: eine Darstellung gemäß Figur 5 teilweise geschnitten;
   - Figur 7: eine Darstellung der Ausführungsform gemäß Figur 6 im Querschnitt gesehen.

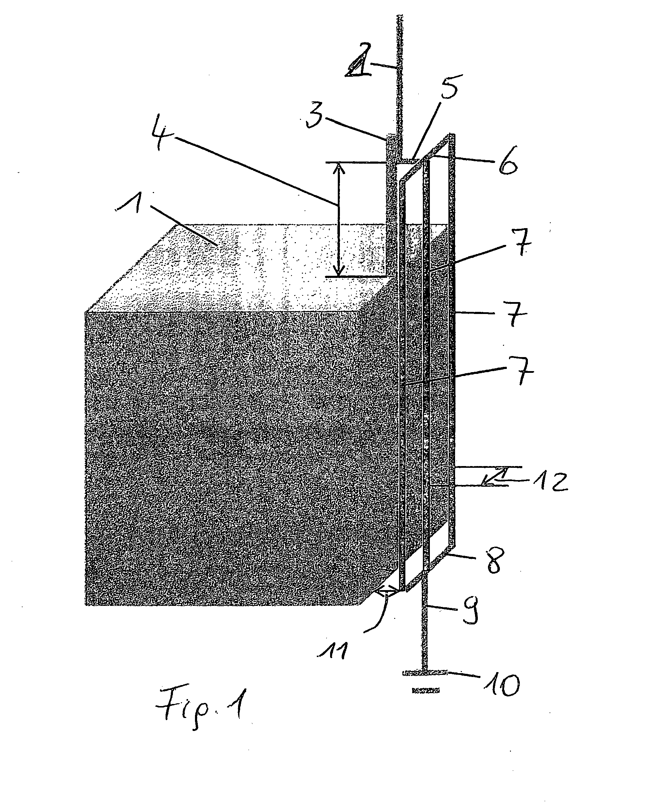

In Figur 1 ist ein beliebiges Gebäude 1 schematisch dargestellt. An diesem Gebäude ist eine Blitzstromableitvorrichtung für den äußeren Blitzschutz vorgesehen. Sie besteht aus einer Fangeinrichtung mit einer Fangstange 2, die an einem Isolator 3 befestigt ist, der wiederum ober seitig des Gebäudes 1 befestigt ist. Der Soll-Abstand 4 ist zwischen einer elektrisch leitenden und blitzstromtragfähigen Verbindung 5 zwischen Fangstange und einer Verbindungsschiene 6 vorgesehen. Des Weiteren sind drei elektrisch isolierte Leiter 7 gezeigt, die oben mit der Verbindungsschiene 6 und unten mit einer weiteren Verbindungsschiene 8 verbunden sind, die ebenfalls elektrisch leitend und blitzstromtragfähig ist. Die untere Verbindungsschiene 8 ist über eine Erdverbindung 9 mit der Erdung 10 verbunden. Mit 11 ist der Abstand zwischen den elektrischen Leitern 7 und der Gebäudewand angegeben, während mit 12 der Abstand zwischen den isolierten elektrischen Leitern 7 angegeben ist.

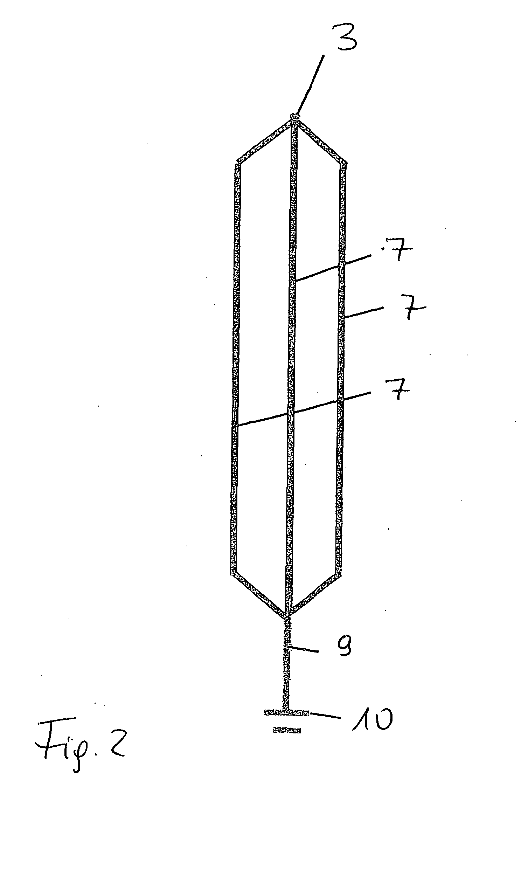

In Figur 2 ist eine Anschlussvariante gezeigt, bei der wiederum die isolierten elektrischen Leiter 7 oben mit einer elektrisch leitenden blitzstromtragfähigen Verbindung 3 und unten mit einer Erdverbindung 9 zum Erder 10 versehen sind.

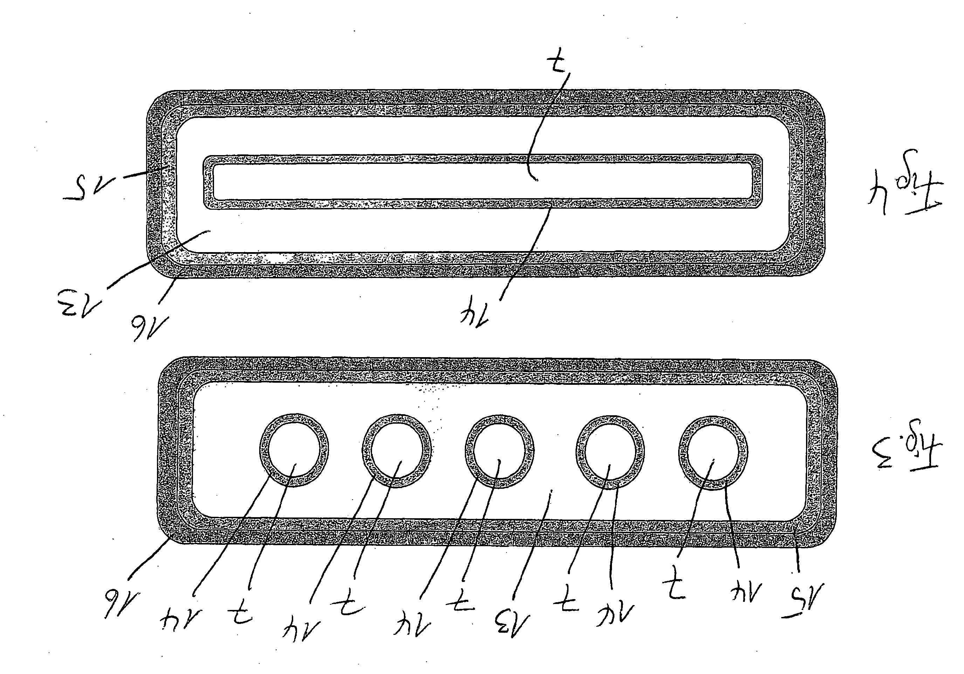

In Figur 3 ist eine Variante gezeigt, bei der fünf einzelne elektrische Leiter 7 mit gleichmäßigem Abstand voneinander in einer hochspannungsfesten Isolationsumhüllung 13, vorzugsweise aus VPE angeordnet sind. Dabei ist jeder einzelne elektrische Leiter 7 von einer inneren Leitschicht 14 umhüllt, die leitfähig ist und vorzugsweise aus leitfähigem VPE besteht.

Die Isolationsumhüllung 13 wiederum ist von einer äußeren leitenden Schicht 15 ebenfalls vorzugsweise aus leitfähigem VPE umgeben. Außerhalb dieser ist eine Hülle aus einer leitenden Schicht 16 vorgesehen, die eine schwach leitende Schicht darstellt, vorzugsweise EVA.

In diesem Ausführungsbeispiel sind die Leiter 7 im Querschnitt kreisförmig ausgebildet.

Bei der Variante nach Figur 4 ist nur ein elektrischer Leiter 7 vorgesehen, der rechteckigen Querschnitt aufweist. Die Ecken sind ausreichend gerundet, um Spannungsüberschläge in den Eckbereichen zu unterbinden. Das Länge zu Breite Verhältnis beträgt hier mehr als 10:1. Auch hierbei ist der innenliegende elektrische Leiter 7 von einer Schicht 14 aus leitfähigem VPE umhüllt. Diese wiederum ist von der Isolationsumhüllung 13 umgeben. Die Isolationsumhüllung 13 ist von einer leitenden Schicht 15 aus leitfähigem VPE umgeben. Schließlich ist wiederum außen eine schwach leitfähige Schicht 16 aus leitfähigem EVA aufgebracht.

Bevorzugt sind Strukturen nach dem Beispiel gemäß Figur 3. Die Struktur gemäß dem Beispiel nach Figur 4 ist aber ebenfalls einsetzbar.

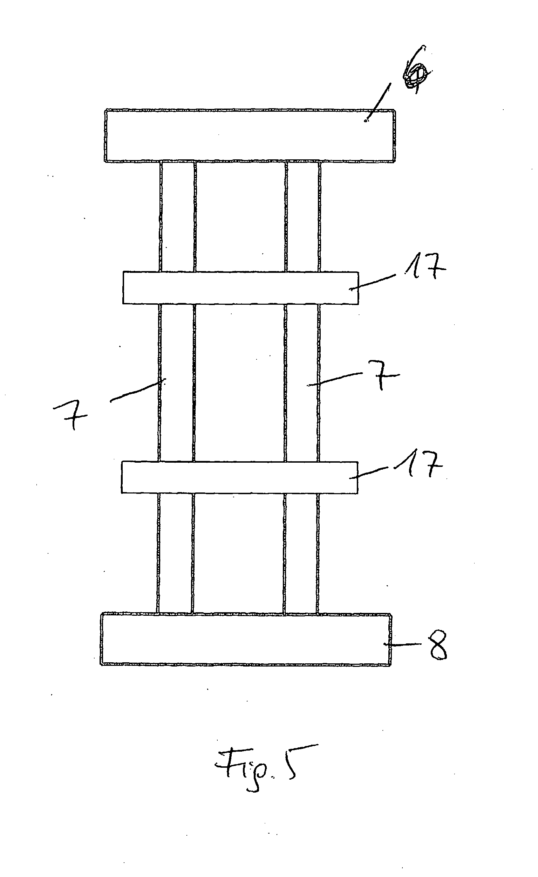

In Figur 5 sind zwei zueinander parallele elektrische Leiter 7 mit den entsprechenden Umhüllungen gemäß Figur 3 gezeigt. Wobei in diesem Beispiel jeder elektrische Leiter 7 die Umhüllung 14, 13, 15 und 16 trägt.

Als Abstandhalter sind beispielsweise aus Isolierstoff bestehende Elemente 17 vorgesehen. Oben und unten sind die entsprechenden elektrisch leitenden und blitzstromtragfähigen Verbindungsschienen 6,8 gezeigt.

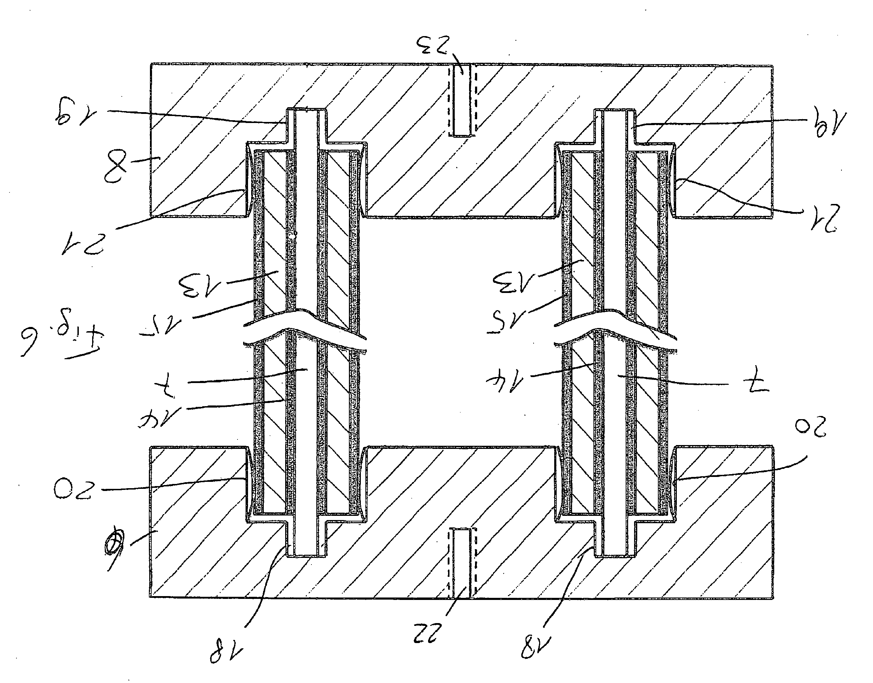

In Figur 6 ist eine Ausführungsbeispielmit solchen Verbindungsschienen 6,8 und Leitern 7 gezeigt, wobei die Leiter 7 wiederum von einer leitfähigen Schicht 14 umgeben sind sowie von einer Isolationsumhüllung 13 und diese wiederum von einer leitfähigen Schicht 15 gegebenenfalls kombiniert mit einer weiteren schwach leitfähigen Schicht aus EVA, wie im Ausführungsbeispiel von Figur 3 angegeben.

Die Verbindungsschienen 6,8 weisen jeweils Sacklochungen 18,19 auf, in die die abisolierten Enden der elektrischen Leiter 7 eingeführt und kontaktiert sind. Dies kann unmittelbar erfolgen oder auch durch eine auf das gesamte Ende des elektrische Leitungskabel aufgesteckte Kappe. Die jeweilige Sacklochung 18,19 ist zum isolierten elektrischen Leiter hin gestuft vergrößert. In diese durchmesser- oder querschnittsgrößere Aufnahmelochung 20,21 kann der elektrisch isolierte Leiter mit seiner Isolierung und den entsprechenden Umhüllungen eingesteckt werden, wie in der Zeichnung dargestellt ist. Zur Kontaktierung sind zusätzlich in der Aufnahmelochung 20 beziehungsweise 21 innenseitig am Mantel radial federnde Kontaktfedern vorgesehen, die am Mantel der die Isolationsumhüllung 13 umgebenden äußeren Schicht, beispielsweise 15, anliegen.

Zusätzlich ist ersichtlich, dass die Verbindungsschienen 6 beziehungsweise 8 oben beziehungsweise unten jeweils eine Gewindebohrung 22,23 aufweisen, die zum Anschluss einer Fangeinrichtung zum Beispiel einer Fangstange 2 oder einer Erdungseinrichtung, zum Beispiel eines Erdverbinders 9 geeignet und bestimmt sind.

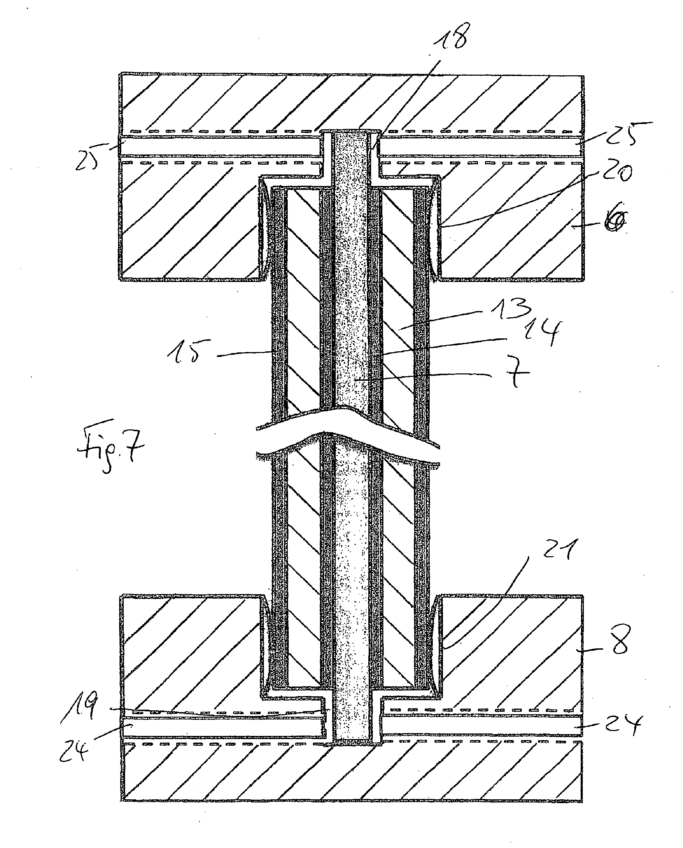

Wie aus der Schnittdarstellung gemäß Figur 7 ersichtlich, ist im Bereich der Anordnung des Endes des abisolierten elektrischen Leiters 7 in der Sacklochung 18 beziehungsweise 19 eine diese kreuzende Gewindebohrung 24,25 vorgesehen. In diese Gewindebohrungen können entsprechende Spannschrauben eingeschraubt werden, um das abisolierte Ende des Leiters 7 zu fixieren und sicher zu kontaktieren.

Die Erfindung ist nicht auf die Ausführungsbeispiele beschränkt, sondern im Rahmen der Offenbarung vielfach variabel.

Alle in der Beschreibung und/oder Zeichnung offenbarten Einzel- und Kombinationsmerkmale werden als erfindungswesentlich angesehen.

## Patentansprüche

1. Blitzstromableitvorrichtung für den äußeren Blitzschutz, bestehend aus einer Fangeinrichtung (1) und einer Erdungsanlage (10), die durch eine elektrische Leiteinrichtung miteinander verbunden sind, wobei die elektrische Leiteinrichtung aus mindestens zwei zueinander parallel geschalteten, isolierten elektrischen Leitern (7) besteht, und die Leiter (7) zueinander im Wesentlichen räumlich parallel verlaufend angeordnet sind **dadurch gekennzeichnet, dass** der Mittenabstand (12) zwischen benachbarten isolierten Leitern (7) zwischen dem einfachen und dem fünfzigfachen Durchmesser der isolierten Leiter (7) beträgt.

2. Vorrichtung nach dem Oberbegriff des Anspruches 1, **dadurch gekennzeichnet, dass** die elektrische Leiteinrichtung aus mindestens einem elektrischen Leiter (7) mit rechteckigem Querschnitt besteht, dessen Ecken vorzugsweise gerundet sind und dessen Seitenkanten ein Breite zu Länge Verhältnis von vorzugsweise mindestens 1:10 beträgt.

3. Vorrichtung nach Anspruch 1, **dadurch gekennzeichnet, dass** mindestens drei parallel geschaltete isolierte Leiter (7) angeordnet sind.

4. Vorrichtung nach einem der Ansprüche 1 oder 3, **dadurch gekennzeichnet, dass** höchstens fünf parallel geschaltete Leiter (7) angeordnet sind.

5. Vorrichtung nach einem der Ansprüche 1,3 oder 4, **dadurch gekennzeichnet, dass** die Leiter (7) gleiche Querschnittsabmessung aufweisen.

6. Vorrichtung nach einem der Ansprüche 1 bis 5, **dadurch gekennzeichnet, dass** jeder Leiter (7) von einer hochspannungsfesten Isolationsumhüllung (13), vorzugsweise aus VPE, umgeben ist.

7. Vorrichtung nach Anspruch 6, **dadurch gekennzeichnet, dass** die Isolationsumhüllung (13) von einer leitenden Schicht (15), vorzugsweise leitfähigem VPE, umgeben ist.

8. Vorrichtung nach einem der Ansprüche 1 bis 7, **dadurch gekennzeichnet, dass** jeder Leiter (7) von einer leitfähigen Schicht (14), vorzugsweise aus leitfähigem VPE, umhüllt ist, die von einer hochspannungsfesten Isolationsumhüllung (13) umgeben ist.

9. Vorrichtung nach einem der Ansprüche 7 oder 8, **dadurch gekennzeichnet, dass** die die Isolationsumhüllung (13) umgebende, leitende Schicht (15) von einer schwach leitfähigen Schicht (16), vorzugsweise einer Schicht aus EVA, umgeben ist.

10. Vorrichtung nach einem der Ansprüche 1 bis 9, **dadurch gekennzeichnet, dass** jeder Leiter (7) aus einem massiven Stab aus elektrisch gut leitendem Metall oder aus einer mehradrigen, verdrillten Seilstruktur aus solchem Metall besteht.

11. Vorrichtung nach einem der Ansprüche 1 bis 10, **dadurch gekennzeichnet, dass** alle elektrischen Leiter (7) von einer gemeinsamen hochspannungsfesten Isolationsumhüllung (13), vorzugsweise aus VPE, umgeben sind.

12. Vorrichtung nach einem der Ansprüche 1 bis 11, **dadurch gekennzeichnet, dass** die der Fangeinrichtung (2) benachbarten Enden und die der Erdungsanlage (10) zugewandten Enden der elektrischen Leiter (7) jeweils an eine blitzstromtragfähige Verbindungsschiene (6,8) angeschlossen sind, die an die Fangstange (2) oder die Erdungsanlage (10) angeschlossen ist.

13. Vorrichtung nach Anspruch 12, **dadurch gekennzeichnet, dass** die die Isolationsumhüllung (13) umgebende leitende Schicht (15) und/oder die diese umgebende schwach leitfähige Schicht (16) an die Verbindungsschienen (6,8) angeschlossen ist.

14. Vorrichtung nach einem der Ansprüche 12 oder 13, **dadurch gekennzeichnet, dass** auf den Enden der elektrischen Leiter (7) samt der diese umgebenden Umhüllungen eine Anschlusskappe aus elektrisch leitendem Material angeordnet ist, mit der die äußere schwach leitende Schicht (16) und der elektrische Leiter (7) kontaktiert ist und die an die jeweilige Verbindungsschiene (6,8) angeschlossen ist.

15. Vorrichtung nach einem der Ansprüche 12 bis 14, **dadurch gekennzeichnet, dass** die Verbindungsschiene (6,8) jeweils eine Durchgangs- oder Sacklochung (18,19) aufweist für jeden elektrischen Leiter (7), so dass dieser in die Lochung kontaktierend einsteckbar ist und dass die Verbindungsschiene (6,8) die Durchgangs- oder Sacklochung(18,19) zentrisch umgebend abgestuft eine querschnitts- oder durchmessergrößere Aufnahmelochung (20,21) für die Isolationsumhüllung (13) samt weiteren diese umgebenden Schichten (15,16) aufweist.

16. Vorrichtung nach Anspruch 15. **dadurch gekennzeichnet, dass** die Verbindungsschiene (6,8) mindestens eine die Sack- oder Durchgangslochung (18,19) kreuzende Gewindebohrung (24,25) mit Spannschraube aufweist, die gegen den Mantel des elektrischen Leiters (7) spannbar ist.

17. Vorrichtung nach einem der Ansprüche 15 oder 16, **dadurch gekennzeichnet, dass** die Aufnahmelochung (20,21) innenseitig am Mantel radial federnde Kontaktfedern aufweist, die am Mantel der die Isolationsumhüllung (13) umgebenden äußersten Schicht (15,16) anliegen.

18. Vorrichtung nach einem der Ansprüche 12 bis 17, **dadurch gekennzeichnet, dass** die Verbindungsschienen (6,8) an der der Erdungsanlage (10) zugewandten Seite und/oder an der der Fangeinrichtung (2) zugewandten Seite eine Gewindebohrung (22,23) zum Anschluss einer Fangeinrichtung oder einer Erdungseinrichtung aufweisen.

## Claims

1. A lightning conductor device for external lightning protection, consisting of a lightning rod (1) and an earthing system (10) that are interconnected by an electrical conductor device, the electrical conductor device consisting of at least two mutually parallel, insulated electrical conductors (7), and the conductors (7) being arranged substantially spatially parallelly, **characterized in that** the center distance (12) between adjacent insulated conductors (7) is between one and fifty times the diameter of the insulated conductors (7).

2. The device according to the preamble of claim 1, **characterized in that** the electrical conductor device consists of at least one electrical conductor (7) having a rectangular cross section, the corners of which preferably are rounded and the side edges of which have a width to length ratio of preferably at least 1:10.

3. The device according to claim 1, **characterized in that** at least three parallelly connected insulated conductors (7) are arranged.

4. The device according to one of claims 1 or 3, **characterized in that** at most five parallelly connected conductors (7) are arranged.

5. The device according to one of claims 1, 3 or 4, **characterized in that** the conductors (7) have identical cross-sectional dimensions.

6. The device according to one of claims 1 to 5, **characterized in that** each conductor (7) is surrounded by a high-voltage resistant insulation jacket (13), preferably made of VPE.

7. The device according to claim 6, **characterized in that** the insulation jacket (13) is surrounded by a conductive layer (15), preferably conductive VPE.

8. The device according to one of claims 1 to 7, **characterized in that** each conductor (7) is covered by a conductive layer (14), preferably made of conductive VPE, which is surrounded by a high-voltage resistant insulation jacket (13).

9. The device according to one of claims 7 or 8, **characterized in that** the conductive layer (15) surrounding the insulation jacket (13) is surrounded by a weakly conductive layer (16), preferably by a layer made of EVA.

10. The device according to one of claims 1 to 9, **characterized in that** each conductor (7) consists of a solid rod made of electrically well-conductive metal or of a multi-strand, twisted rope structure made of such a metal.

11. The device according to one of claims 1 to 10, **characterized in that** all electrical conductors (7) are surrounded by a common high-voltage resistant insulation jacket (13), preferably made of VPE.

12. The device according to one of claims 1 to 11, **characterized in that** the ends adjacent to the lightning rod (2) and the ends of the electrical conductors (7) facing the earthing system (10) are each connected to a lightning current-resistant connection rail (6, 8) that is connected to the lightning rod (2) or the earthing system (10).

13. The device according to claim 12, **characterized in that** the conductive layer (15) surrounding the insulation jacket (13) and/or the weakly conductive layer (16) surrounding the conductive layer (15) are connected to the connection rails (6, 8).

14. The device according to one of claims 12 or 13, **characterized in that** on the ends of the electrical conductors (7) and the jackets surrounding them, a connection cap made of an electrically conductive material is arranged, with which the external weakly conductive layer (16) and the electrical conductor (7) is contacted and which is connected to the respective connection rail (6, 8).

15. The device according to one of claims 12 to 14, **characterized in that** the connection rail (6, 8) respectively has a through or blind hole (18, 19) for each electrical conductor (7), so that the latter can be inserted in a contacting manner into the hole, and that the connection rail (6, 8) has a stepped receiving hole (20, 21) centrally surrounding the through or blind hole (18, 19) and having a larger cross section or diameter for receiving the insulation jacket (13) together with further layers (15, 16) surrounding the latter.

16. The device according to claim 15, **characterized in that** the connection rail (6, 8) includes at least one threaded hole (24, 25) crossing the through or blind hole (18, 19) with a tensioning screw that can be tensioned against the jacket of the electrical conductor (7).

17. The device according to one of claims 15 or 16, **characterized in that** the receiving hole (20, 21) has on its inner side at the jacket radially resilient contact springs abutting the jacket of the outermost layer (15, 16) surrounding the insulation jacket (13).

18. The device according to one of claims 12 to 17, **characterized in that** the connection rails (6, 8) include, at the side facing the earthing system (10) and/or an the side facing the lightning rod (2), a threaded hole (22, 23) for the connection of a lightning rod or of an earthing system.

## Revendications

1. Dispositif de dérivation du courant de foudre pour la protection externe contre la foudre, consistant en un parafoudre (1) et en un système de mise à la terre (10) qui sont raccordés l'un à l'autre par un dispositif conducteur électrique, le dispositif conducteur électrique consistant en au moins deux conducteurs électriques isolés (7) parallèles les uns aux autres, et les conducteurs (7) étant situés sensiblement spatialement en parallèle, **caractérisé en ce que** l'entraxe (12) entre des conducteurs isolés (7) voisins est égal à une à cinquante fois le diamètre des conducteurs isolés (7).

2. Dispositif selon le préambule de la revendication 1, **caractérisé en ce que** le dispositif conducteur électrique consiste en au moins un conducteur électrique (7) étant de section rectangulaire, les coins duquel sont arrondis et les bords latéraux de laquelle de préférence ont un rapport largeur sur longueur d'au moins 1:10.

3. Dispositif selon la revendication 1, **caractérisé en ce qu'**au moins trois conducteurs isolés (7) raccordés en parallèle sont disposés.

4. Dispositif selon une des revendications 1 ou 3, **caractérisé en ce qu'**au maximum cinq conducteurs (7) raccordés en parallèle sont disposés.

5. Dispositif selon une des revendications 1, 3 ou 4, **caractérisé en ce que** les conducteurs (7) ont des dimensions de section égales.

6. Dispositif selon une des revendications 1 à 5, **caractérisé en ce que** chaque conducteur (7) est entouré par une enveloppe d'isolation (13) résistante à la haute tension, de préférence en VPE.

7. Dispositif selon la revendication 6, **caractérisé en ce que** l'enveloppe d'isolation (13) est entourée par une couche conductrice (15), de préférence en VPE conducteur.

8. Dispositif selon une des revendications 1 à 7, **caractérisé en ce que** chaque conducteur (7) est recouvert d'une couche conductrice (14), de préférence en VPE conducteur, qui est entourée par une enveloppe d'isolation (13) résistante à la haute tension.

9. Dispositif selon une des revendications 7 ou 8, **caractérisé en ce que** la couche conductrice (15) entourant l'enveloppe d'isolation (13) est entourée par une couche faiblement conductrice (16), de préférence par une couche en EVA.

10. Dispositif selon une des revendications 1 à 9, **caractérisé en ce que** chaque conducteur (7) consiste en une barre solide en métal électriquement bien conducteur ou en une structure de câble multifilaire torsadée en un tel métal.

11. Dispositif selon une des revendications 1 à 10, **caractérisé en ce que** tous les conducteurs électriques (7) sont entourés par une enveloppe d'isolation (13) commune résistante à la haute tension, de préférence en VPE.

12. Dispositif selon une des revendications 1 à 11, **caractérisé en ce que** les extrémités voisines au parafoudre (2) et les extrémités des conducteurs électriques (7) dirigées vers le système de mise à la terre (10) sont chacune raccordées à une éclisse de raccordement (6, 8) résistante au courant de foudre, qui est raccordée au parafoudre (2) ou au système de mise à la terre (10).

13. Dispositif selon la revendication 12, **caractérisé en ce que** la couche conductrice (15) entourant l'enveloppe d'isolation (13) et/ou la couche faiblement conductrice (16) entourant la couche conductrice (15) sont raccordées aux éclisses de raccordement (6, 8).

14. Dispositif selon une des revendications 12 ou 13, **caractérisé en ce que** sur les extrémités des conducteurs électriques (7) et les enveloppes entourant ceux-ci, un bouchon de raccordement en un matériau électriquement conducteur est disposé, avec qui la couche externe faiblement conductrice (16) et le conducteur électrique (7) sont contactés et qui est raccordée à l'éclisse de raccordement (6, 8) respective.

15. Dispositif selon une des revendications 12 à 14, **caractérisé en ce que** l'éclisse de raccordement (6, 8) respectivement comporte un trou traversant ou borgne (18, 19) pour chaque conducteur électrique (7), de façon que le dernier puisse être inséré en contact dans le trou, et que l'éclisse de raccordement (6, 8) a un trou de réception (20, 21) étagé centralement entourant le trou traversant ou borgne (18, 19) avec une section ou un diamètre plus grand pour recevoir l'enveloppe d'isolation (13) ensemble avec d'autres couches (15, 16) entourant celle-ci.

16. Dispositif selon la revendication 15, **caractérisé en ce que** l'éclisse de raccordement (6, 8) comporte au moins un trou taraudé (24, 25) croisant le trou traversant ou borgne (18, 19) avec une vis de serrage, qui peut être serrée contre l'enveloppe du conducteur électrique (7).

17. Dispositif selon une des revendications 15 ou 16, **caractérisé en ce que** le trou de réception (20, 21) a sur son côté intérieur à l'enveloppe des ressorts de contact radialement élastiques s'appuyant contre l'enveloppe de la couche (15, 16) la plus extérieure entourant l'enveloppe d'isolation (13).

18. Dispositif selon une des revendications 12 à 17, **caractérisé en ce que** les éclisses de raccordement (6, 8) comportent, au côté dirigé vers le système de mise à la terre (10) et/ou au côté dirigé vers le parafoudre (2), un trou taraudé (22, 23) pour le raccordement d'un parafoudre ou d'un système de mise à la terre.
